# EUROPEAN PATENT SPECIFICATION

(11) **EP 1 833 333 B1**
(45) Date of publication and mention of the grant of the patent: **25.06.2008**
(21) Application number: 05815507.8
(22) Date of filing: 29.11.2005
(51) Int. Cl.: A47J 27/08

(54) **PRESSURE COOKER LID**
DAMPFKOCHTOPFDECKEL
COUVERCLE D'AUTOCUISEUR

(30) Priority: 06.12.2004 IT MI20042344
(43) Date of publication of application: 19.09.2007
(73) Proprietor: Inoxia S.R.L., 28845 Domodossola VB (IT)
(72) Inventor: CARTOSSI, Andrea, 28924 Verbania Fondotoce (VB) (IT)
(74) Representative: Ripamonti, Enrico
(86) International application number: PCT/EP2005/056314
(87) International publication number: WO 2006/061339

(56) References cited:
- EP-A- 1 344 476
- WO-A-01/91619
- WO-A-20/04041037
- US-A- 4 627 417

## Description

The present invention relates to pressure cooker lids.

A known pressure cooker lid comprises a support element which, in the manner of a lid, fits onto the outwardly extending upper edge of a cooking receptacle by way of an interposed seal gasket; and a plurality of movable jaws carried by the support element, the end portions of which are intended to engage the outwardly extending upper edge of the cooking receptacle. Said support element also carries a mechanism comprising an element rotatable about the axis of the support element, this mechanism enabling the jaws to be made to approach or respectively withdraw from the support element (by rotating the rotatable element in one direction or the other), to cause the end portions of the jaws to engage the outwardly extending edge of the cooking receptacle (in such a manner as to grip under the outwardly extending edge) and respectively to disengage said end portions from said edge.

An operating means is also provided for rotating said rotatable element, to consequently cause the jaws to withdraw from the outwardly extending edge of the receptacle (in order to be able to remove the lid), or to approach said edge in order to apply the lid to the receptacle. In all pressure cooker lids having the aforedescribed characteristics, which have been known for three decades and are widely available commercially, the operating means for rotating the rotatable element is situated above the rotatable element itself, coaxially to this latter and hence to the lid. It follows that for each movement of the operating means by the user there is a corresponding rotary coaxial movement (in one direction or the other) of the underlying rotatable element. In view of the central position of the operating means, this latter also acts as the handgrip for the lid, enabling it to be manipulated.

The aforedescribed known lids present various drawbacks, which will now be described.

When such a lid is used, the user must, with one and the same hand, grip the lid handgrip (which coincides with the operating means); position the lid on the cooking receptacle; exert on the handgrip a not inconsiderable pressure to prevent the support element from slipping (dragged by the rotary movement of the operating means) on the outwardly extending edge of the cooking receptacle; and finally impress on the operating means (coinciding with the manipulating handgrip) a rotary movement enabling the rotatable element to rotate through an angle sufficient to cause the ends of the jaws to approach the outwardly extending edge of the receptacle until they engage below it.

As will be apparent, this is an operation which, besides not being easy (seeing that two different movements, that is pressing and rotating, have to be performed simultaneously with one and the same hand), also requires a not inconsiderable force.

As the users of pressure cookers are mainly women, a means of making the aforedescribed operation less difficult would certainly be welcome. For example, this would be very useful in the case of persons who because of various problems (for example illness, trauma, handicap or advanced age) are unable to exert with a single hand a rotation action on the operating means together with a simultaneous significant thrust action.

It must also be added that the user's difficulties increase when the reverse operation is required, that is removing the lid from the cooking receptacle. This operation, which also requires the operating means (coinciding with the handgrip) to be pressed downwards while rotating it, is normally carried out as soon as the food contained in the receptacle is cooked, so that the handgrip is at a very high temperature, very close to the temperature of the metal part of the lid. The user is therefore obliged to use known protection means for the hands (normally kitchen gloves), which make the opening operation even more difficult. An object of the present invention is therefore to obviate the aforesaid drawbacks by providing the user with a lid of the stated type which is simple and decidedly more operable than known lids. Another drawback is due to the fact that for both technical and marketing reasons, the aforedescribed lids are provided with a thermometer which measures the temperature inside the cooking receptacle. This thermometer is positioned at the centre of the lid so that its extending part measures the temperature within a central area just below the lid, and hence in an optimal region within the cooking receptacle. The thermometer is preferably inserted into the handgrip and extends downwards to beyond the top of the support element. This creates a further complication in the manufacture of this type of known lid, as the combined handgrip-operating means has to be split into at least two concentric parts, one of which, the inner, is fixed to be able to receive the thermometer, while the other, the outer, is movable and represents the actual combined handgrip-operating means for operating the rotatable element.

Another object of the present invention is therefore to provide a lid which does not present this latter complication.

The aforestated objects are attained by a lid according to the enclosed claim 1.

The invention will be more apparent from the following description of two embodiments thereof. In this description reference is made to the accompanying drawings, in which:
Figure 1 is an exploded perspective view of a lid according to the present invention, with the jaws in their position of maximum withdrawal;
Figure 2 is a perspective view of the lower part of Figure 1, with the difference that the jaws are in their position of maximum approach;
Figure 3 is a plan view of the same part, but with the jaws in the condition of Figure 1;
Figure 4 is a perspective view showing the underlying face of the lower part of the lid, with the jaws in the condition of Figure 1;
Figure 5 is similar to Figure 4, with the only difference that the jaws are in the condition of Figure 2;
Figure 6 is similar to Figure 1 and shows a variant of the lid according to the present invention.

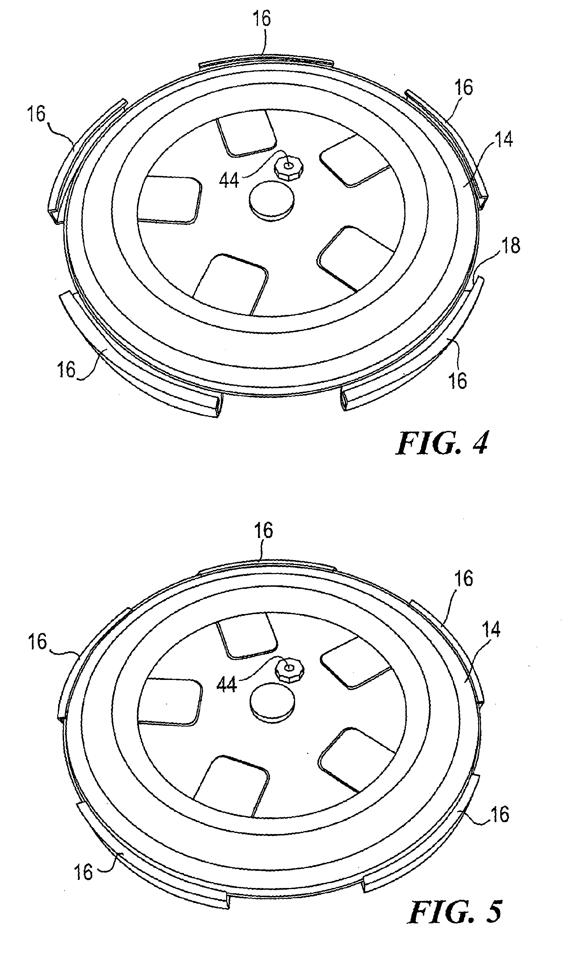

As can be seen from the figures, the lid 10 comprises a circular support element 12 which, in the manner of a lid, fits onto the outwardly extending upper edge of a cooking receptacle (not shown) by way of an interposed seal gasket 14 (Figures 4 and 5).

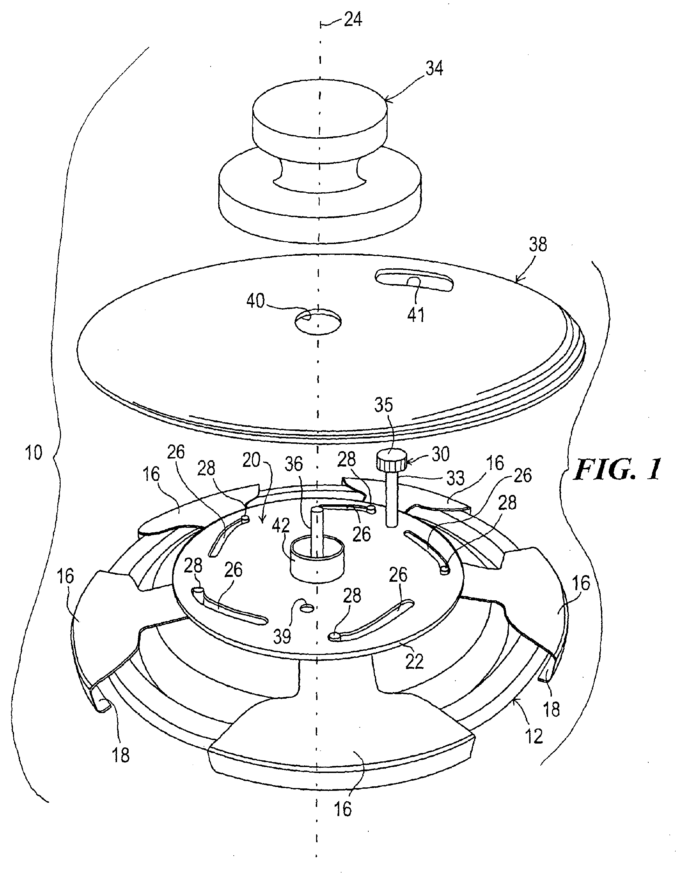

The support element 12 carries a multiplicity of jaws (five in the illustrated example), the hook-shaped end portions 18 (Figures 1 and 4) of which are intended to engage the outwardly extending upper edge of the cooking receptacle.

The support element 12 also carries a mechanism, indicated overall by 20, which enables the jaws 16 to be made to approach and respectively withdraw from the support element 12, in order to cause the end portions 18 of the jaws 16 to engage below the outwardly extending edge (not shown) of the cooking receptacle and respectively to disengage from said outwardly extending edge.

The control mechanism 20 comprises a disc-shaped element 22 rotatable about the axis 24 of the lid 10. In the illustrated example, the rotatable element 22 presents five slots 26 (their number being equal to that of the jaws 16) which constitute cam guides for receiving respective cam follower pins 28 extending upwards from the inner end of a relative jaw 16, this end being interposed between the support element 12 and the rotatable element 22.

Other known means different from the described slots 26 can be used for coupling the jaws 16 to the rotatable element 22.

For example the jaws 16 can be pivoted, directly or via small arms, possibly articulated, to the rotatable element 22. In all cases, the control mechanism 20 still comprises a rotatable element 22 and jaws 16 which can be coupled thereto.

The means for coupling the jaws 16 to the rotatable element 22 can be different from the aforedescribed, provided they are such that any possible movement of the rotatable element about its axis, in one direction or the other, results respectively in a centripetal movement or centrifugal movement of the jaws 16.

To operate the control mechanism 20 and hence cause the jaws 16 to withdraw or approach, an operating means is provided indicated overall by 30. This latter in the specific case of Figures from 1 to 3 comprises a pin 33 fixed to the rotatable element 22 and extending upwards. It is preferably provided with a knob 35 which the user can more easily grip with the fingers. This does not mean that the knob 35 is necessarily an added piece, the term "knob" also simply meaning the upper end of the pin 33.

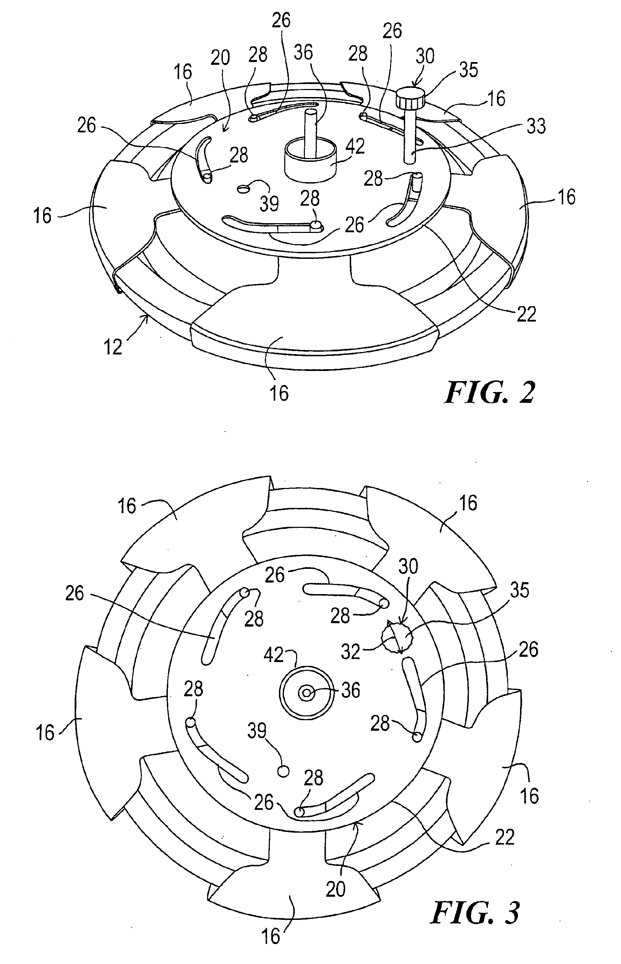

As can be seen from Figures from 1 to 3, the knob 35 lies at a significant distance (arm) from the axis of rotation 24 of the rotatable element 22, so that to operate the mechanism it is sufficient to apply a very small tangential force to the knob 35 in one direction or another (depending on whether the jaws 16 are to be made to withdraw or approach), this force being indicated by the double arrow 32 in Figure 3.

The lid 10 is also provided with a central handgrip 34 (Figure 1) for its manipulation. In this specific example the handgrip 34 is fixed to the support element 12 by an externally threaded coaxial pin 36, the lower end of which is fixed to the support element 12. The pin 36 passes into a coaxial hole provided in the rotatable element 22 and projects above it, to enable the handgrip 34, provided for this purpose with a threaded coaxial hole (not shown) opening into the lower face of the handgrip 34, to be screwed onto it.

A conventional thermometer (not shown for simplicity) can be provided in the handgrip 34.

For aesthetic and hygienic reasons, and to prevent the mechanism 20 from becoming easily soiled (with consequent possible jamming), the lid 10 is provided (as are known lids of this type) with a cover 38 having a diameter just larger than that of the jaws when in their maximum withdrawal position. The cover 38 presents a central through hole 40 to allow passage of the threaded pin 36. The hole 40 has a diameter less than that of a bush 42 fixed coaxially to the rotatable element 22 such that the cover 38 can rest on the bush 42 and remain locked between this latte and the handgrip 34 when the handgrip is screwed onto the threaded pin 36. The cover 38 is provided with a slot-shaped through hole 41 through which the end part of the operating pin 33, which can also coincide with the knob 35, passes.

The considerable merit of the lid 10 is that because of the significant arm existing between the point at which the pin 33 is applied to the rotatable element 22 and the axis of rotation 24 of this latter, which coincides with the axis of the fixed central handgrip 34 (when completely screwed onto the pin 36), it becomes extremely easy, using one hand, namely the one gripping the handgrip 34, to prevent the support element 12 from rotating about the cooking receptacle without having to press hard on the handgrip 34, while with the other hand simultaneously rotating the rotatable element 22 by acting with the fingers of that other hand on the knob 35, so that the mechanism easily passes from the situation of Figure 1 to that of Figure 2 or vice versa.

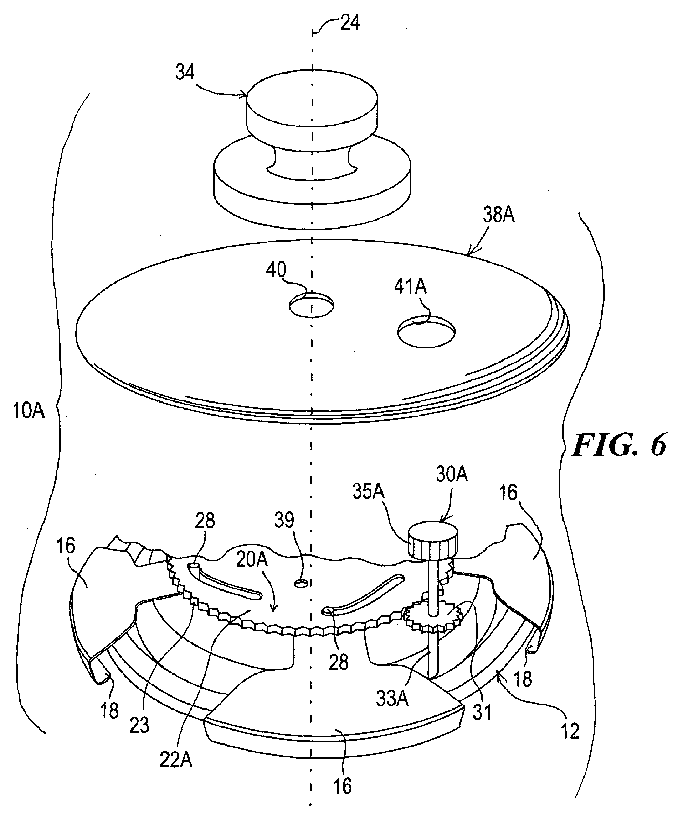

In the variant shown in Figure 6, the lid 10A differs from the lid 10 of Figures 1-3 by a different means of operating the control mechanism 20A. In this respect, the circular rotatable element 22A has a toothed peripheral edge (23) which engages a pinion 31 keyed onto a vertical spindle 33A, the lower end of which is rotatably fixed to the support element 12. On the top of the spindle 33A a knurled knob 35A is fixed, which can be operated with the fingers to rotate the spindle 33A and hence the pinion 31 keyed onto this latter. The pinion 31 then rotates the rotatable element 22, to hence operate the mechanism 20A, of which the remainder is identical to the mechanism 20 of Figures 1-3 (so that no further description is necessary). Instead of being keyed onto the spindle 33A, both the pinion 31 and the knurled knob 35A could form an integral part of its structure.

The lid 10A is also provided with a cover 38A which differs from the cover 38 of Figure 1 only in that instead of the slotted hole 41, a circular hole 41A is provided through which the operating knob 35 can pass.

It should also be noted that the lid of the invention must be provided with conventional safety valves, which have not been shown in the figures in order not to complicate them further and also because these valves do not form part of the present invention.

The lid can also be provided with a safety device to prevent the control mechanism (20, 20A) from being able to be operated when the cooking receptacle is under pressure. In this specific example the safety device comprises a piston 44 (Figures 4 and 5) which projects upwards from the support element 12 when the cooking receptacle is under pressure, the piston 44 when in this condition becoming inserted in hole 39 provided in the rotatable element 22, to prevent it from rotating.

## Claims

1. A pressure cooker lid (10; 10A), comprising:
- a support element (12) which, in the manner of a lid, fits onto the outwardly extending upper edge of a cooking receptacle by may of an interposed seal gasket (14);
- a plurality of movable jaws (16) carried by the support element (12), the end portions (18) of the jaws (16) being intended to engage the outwardly extending upper edge of the cooking receptacle;
- a mechanism (20; 20A) comprising an element (22; 22A) rotatable about the axis (24) of the support element (12), the mechanism (20; 20A) enabling the jaws (16) to be made to approach or respectively withdraw from the support element (12) by rotating the rotatable element (22; 22A) in one direction or the other, to cause the end portions (18) of the jaws (16) to engage the outwardly extending edge of the cooking receptacle and respectively to disengage said end portions (18) from said edge;
- a handgrip (34), connected directly or indirectly to the support element (12), for manipulating the lid (10; 10A).
- an operating means (30; 30A) for rotating the rotatable element (22; 22A) of the control mechanism (20; 20A), comprising a knob (35; 35A) enabling the user to operate the operating means (30; 30A);
whereby
- the movement of the rotatable element (22; 22A) by the action of the operating means (30; 30A) is independent of the handgrip (34), the rotatable element (22; 22A) being free to move with respect to the handgrip (34), **characterised in that** the operating means comprises an operating pin (33) carrying the knob (35), the operating pin (33) extending upwards, it being fixed eccentrically to the rotatable element (22; 22A) and being eccentric to the axis of rotation (24) of this latter (22; 22A).

2. A lid (10A) as claimed in claim 1, wherein the manipulating means comprises a pin (33A) carrying the knob (35A), the lower end of the operating pin (33A) being rotatably fixed to the support element (12), the outer surface of the pin (33A) or of the knob (35A), or of both, presenting an entire or part pinion structure (31) which engages a toothing provided on the circular peripheral edge of the rotatable element (22).

3. A lid (10) as claimed in claim 1, wherein a cover (38) upperly covering the support element (12), the jaws (16) and the control mechanism (20) is provided, the cover comprising a first through hole (40) coaxial with the support element (12), through which means (36) for fixing the handgrip (34) to the support element (12) pass, and at least a second slotted through hole (41) through which the knob (35) can project to the outside, whether the jaws (16) are in their condition of withdrawal or approach.

4. A lid (10A) as claimed in claims 1 and 2, wherein a cover (38A) upperly covering the support element (12), the jaws (16) and the control mechanism (20A) is provided, the cover comprising a first through hole (40) coaxial with the support element (12), through which means (36) for fixing the handgrip (34) to the support element (12) pass, and at least a second through hole (41A) through which the knob (35A) projects to the outside.

5. A lid (10; 10A) as claimed in claim 1, wherein a thermometer is incorporated into the handgrip (34) to measure the temperature in the interior of the cooking receptacle.

6. A lid (10, 10A) as claimed in claim 1, comprising a safety device preventing rotation of the rotatable element (22; 22A) when the cooking receptacle is under pressure, the safety device comprising, carried by the support element (12), a vertically movable piston (44) which when the cooking receptable is under pressure is thrust upwards to enter a hole (39) provided in the rotatable element (22; 22A) in order to prevent its rotation.

## Patentansprüche

1. Schnellkochtopfdeckel (10; 10A), aufweisend:
- ein Tragelement (12), welches nach Art eines Deckels auf den sich auswärts erstreckenden oberen Rand eines Kochgefäßes passt, wobei dazwischen eine Dichtung (14) angeordnet ist;
- eine Mehrzahl beweglicher Backen (16), die von dem Tragelement (12) getragen sind, wobei die Endabschnitte (18) der Backen (16) dazu vorgesehen sind, mit dem sich auswärts erstreckenden oberen Rand des Kochgefäßes in Kontakt zu treten;
- einen Mechanismus (20; 20A) mit einem Element (22, 22A), welches um die Achse (24) des Tragelements (12) drehbar ist, wobei der Mechanismus (20; 20A) die Backen (16) in die Lage versetzt, an das Tragelement (12) angenähert oder davon entfernt zu werden, indem das drehbare Element (22; 22A) in eine Richtung oder in die andere Richtung gedreht wird, um zu bewirken, dass die Endabschnitte (18) der Backen (16) mit dem sich auswärts erstreckenden Rand des Kochgefäß in Kontakt treten, bzw. um die Endabschnitte (18) von dem Rand zu lösen;
- einen Handgriff (34), der direkt oder indirekt mit dem Tragelement (12) verbunden ist, zur Handhabung des Deckels (10; 10A);
- ein Betätigungsmittel (30; 30A) zum Drehen des drehbaren Elements (22; 22A) des Steuermechanismus (20; 20A), umfassend einen Knauf (35; 35A), welcher es dem Benutzer ermöglicht, das Betätigungsmittel (30; 30A) zu betätigen; wobei
- die Bewegung des drehbaren Elements (22; 22A) durch die Wirkung des Betätigungsmittels (30; 30A) unabhängig von dem Handgriff (34) ist, wobei das drehbare Element (22; 22A) hinsichtlich seiner Bewegung relativ zu dem Handgriff (34) frei ist;
**dadurch gekennzeichnet,**
**dass** das Betätigungsmittel einen Betätigungsstift (33) aufweist, welcher den Knauf (35) trägt, wobei sich der Betätigungsstift (33) aufwärts erstreckt, exzentrisch bezüglich des drehbaren Elements (22; 22A) befestigt ist und exzentrisch bezüglich der Drehachse (24) des letzteren (22; 22A) angeordnet ist.

2. Deckel (10A) nach Anspruch 1,
**dadurch gekennzeichnet,**
**dass** das Handhabungsmittel einen Stift (33A) aufweist, welcher den Knauf (35A) trägt, wobei das untere Ende des Betätigungsstifts (33A) drehbar an dem Tragelement (12) befestigt ist, wobei die Außenfläche des Stifts (33A) und/oder des Knaufs (35A) eine vollständige oder teilweise Zahnradstruktur (31) aufweist, welche in eine Zahnung eingreift, die an der kreisförmigen Umfangskante des drehbaren Elements (22) vorgesehen ist.

3. Deckel (10) nach Anspruch 1,
**dadurch gekennzeichnet,**
**dass** eine Abdeckung (38) vorgesehen ist, welche das Tragelement (12), die Backen (16) und den Steuermechanismus (20) von oben abdeckt, wobei die Abdeckung einen ersten Durchbruch (40) aufweist, der koaxial zu dem Tragelement (12) ist, durch welchen sich Mittel (36) zum Befestigten des Handgriffs (34) an dem Tragelement (12) erstrecken, und wenigstens einen zweiten, schlitzförmigen Durchbruch (41), durch welchen der Knauf (35) nach außen herausragen kann, unabhängig davon, ob die Backen (16) sich in ihrem zurückgezogenen oder angenäherten Zustand befinden.

4. Deckel (10A) nach Anspruch 1 und Anspruch 2,
**dadurch gekennzeichnet,**
**dass** eine Abdeckung (38A) vorgesehen ist, welche das Tragelement (12), die Backen (16) und den Steuermechanismus (20A) von oben abdeckt, wobei die Abdeckung einen ersten Durchbruch (40) aufweist, der koaxial zu dem Tragelement (12) ist, durch welchen sich Mittel (36) zum Befestigen des Handgriffs (34) an dem Tragelement (12) erstrecken, und wenigstens einen zweiten Durchbruch (41A), durch welchen der Knauf (35A) nach außen herausragt.

5. Deckel (10; 10A) nach Anspruch 1,
**dadurch gekennzeichnet,**
**dass** ein Thermometer in den Handgriff (34) aufgenommen ist, um die Temperatur im Innern des Kochgefäßes zu messen.

6. Deckel (10, 10A) nach Anspruch 1,
**gekennzeichnet durch** eine Sicherheitseinrichtung, die eine Drehung des drehbaren Elements (22; 22A) verhindert, wenn das Kochgefäß unter Druck steht, wobei die Sicherheitseinrichtung einen vertikal beweglichen Kolben (44) umfasst, der **durch** das Tragelement (12) getragen ist, welcher dann, wenn das Kochgefäß unter Druck steht, aufwärts gedrückt wird und in ein Loch (39) eindringt, welches in dem drehbaren Element (22; 22A) vorgesehen ist, um dessen Drehung zu verhindern.

## Revendications

1. Couvercle d'autocuiseur (10 ; 10A) comprenant :
un élément de support (12) qui, à la manière d'un couvercle, s'adapte sur le bord supérieur s'étendant à l'extérieur d'un réceptacle de cuisson au moyen d'un joint d'étanchéité interposé (14) ;
une pluralité de mâchoires mobiles (16) supportée par l'élément de support (12), les parties d'extrémité (18) des mâchoires (16) étant prévues pour mettre en prise le bord supérieur s'étendant vers l'extérieur du réceptacle de cuisson ;
un mécanisme (20 ; 20A) comprenant un élément (22 ; 22A) pouvant tourner autour de l'axe (24) de l'élément de support (12), le mécanisme (20 ; 20A) permettant aux mâchoires (16) de se rapprocher ou de se retirer respectivement de l'élément de support (12) en faisant tourner l'élément rotatif (22 ; 22A) dans une direction ou dans l'autre, pour amener les parties d'extrémité (18) des mâchoires (16) à mettre en prise le bord s'étendant vers l'extérieur du réceptacle de cuisson et respectivement à dégager lesdites parties d'extrémité (18) dudit bord ;
une poignée (34), raccordée directement ou indirectement à l'élément de support (12) pour manipuler le couvercle (10 ; 10A) ;
des moyens de commande (30 ; 30A) pour faire tourner l'élément rotatif (22 ; 22A) du mécanisme de commande (20 ; 20A) comprenant un bouton (35 ; 35A) permettant à l'utilisateur d'actionner les moyens de commande (30 ; 30A) dans lequel :
le mouvement de l'élément rotatif (22 ; 22A) par l'action des moyens de commande (30 ; 30A) est indépendant de la poignée (34), l'élément rotatif (22 ; 22A) étant libre de se déplacer par rapport à la poignée (34),
**caractérisé en ce que** les moyens de commande comprennent une broche de commande (33) supportant le bouton (35), la broche de commande (33) s'étendant vers le haut, étant fixée de manière excentrique sur l'élément rotatif (22 ; 22A) et étant excentrique par rapport à l'axe de rotation (24) de ce dernier (22 ; 22A)

2. Couvercle (10A) selon la revendication 1, dans lequel les moyens de manipulation comprennent une broche (33A) supportant le bouton (35A), une extrémité inférieure de la broche de commande (33A) étant fixée de manière rotative sur l'élément de support (12), la surface externe de la broche (33A) ou du bouton (35A) ou des deux, présentant une partie de pignon entière ou partielle (31) qui met en prise une dent prévue sur le bord périphérique circulaire de l'élément rotatif (22).

3. Couvercle (10) selon la revendication 1, dans lequel on prévoit un couvercle (38) recouvrant vers le haut l'élément de support (12), les mâchoires (16) et le mécanisme de commande (20), le couvercle comprenant un premier trou de passage (40) coaxial avec l'élément de support (12), à travers lequel des moyens (36) pour fixer la poignée (34) à l'élément de support (12) passe et au moins un second trou de passage fendu (41) à travers lequel le bouton (35) peut faire saillie vers l'extérieur, si les mâchoires (16) sont dans leurs conditions de retrait ou d'approche.

4. Couvercle (10A) selon les revendications 1 ou 2, dans lequel on prévoit un couvercle (38A) recouvrant vers le haut l'élément de support (12), les mâchoires (16) et le mécanisme de commande (20A), le couvercle comprenant un premier trou de passage (40) coaxial avec l'élément de support (12), à travers lequel des moyens (36) pour fixer la poignée (34) à l'élément de support (12) passent, et au moins un second trou de passage (41 A) à travers lequel le bouton (35A) fait saillie vers l'extérieur.

5. Couvercle (10 ; 10A) selon la revendication 1, dans lequel un thermomètre est incorporé dans la poignée (34) pour mesurer la température à l'intérieur de réceptacle de cuisson.

6. Couvercle (10 ; 10A) selon la revendication 1, comprenant un dispositif de sécurité empêchant l'élément rotatif (22 ; 22A) de tourner lorsque le réceptacle de cuisson est sous pression, le dispositif de sécurité comprenant, supporté par l'élément de support (12), un piston verticalement mobile (44) qui, lorsque le réceptacle de cuisson est sous pression, est poussé vers le haut pour pénétrer dans un trou (39) prévu dans l'élément rotatif (22 ; 22A) afin d'empêcher sa rotation.
